# EUROPÄISCHE PATENTSCHRIFT

(11) **EP 3 580 153 B1**
(45) Veröffentlichungstag und Bekanntmachung des Hinweises auf die Patenterteilung: **10.08.2022**
(21) Anmeldenummer: 18703771.8
(22) Anmeldetag: 06.02.2018
(51) Int. Cl.: B65G 17/20, B65G 17/48, B65G 9/00

(54) **HÄNGETASCHE ALS FÖRDERGUTBEHÄLTER ZUM TRANSPORT VON FÖRDERGUT IN EINER HÄNGEFÖRDEREINRICHTUNG SOWIE HÄNGEFÖRDEREINRICHTUNG MIT EINER SOLCHEN HÄNGETASCHE**
HANGING POCKET AS CONVEYED-GOODS CONTAINER FOR TRANSPORTING CONVEYED GOODS IN A HANGING CONVEYOR DEVICE, AND HANGING CONVEYOR DEVICE HAVING SUCH A HANGING POCKET
DOSSIER SUSPENDU COMME RÉCIPIENT DE MATIÈRE À TRANSPORTER POUR LE TRANSPORT DE MATIÈRE À TRANSPORTER DANS UN DISPOSITIF À DOSSIER SUSPENDU AINSI QUE DISPOSITIF À DOSSIER SUSPENDU PRÉSENTANT UN TEL DOSSIER SUSPENDU

(30) Priorität: 07.02.2017 DE 102017201919
(43) Veröffentlichungstag der Anmeldung: 18.12.2019
(73) Patentinhaber: RSL Logistik GmbH & Co. KG, 86899 Landsberg (DE)
(72) Erfinder: SCHÖNENBERGER, Rolf, 86899 Landsberg/Lech (DE)
(74) Vertreter: Weickmann & Weickmann PartmbB
(86) Internationale Anmeldenummer: PCT/EP2018/052909
(87) Internationale Veröffentlichungsnummer: WO 2018/146077

(56) Entgegenhaltungen:
- EP-A1- 2 130 968
- WO-A1-2014/012965
- DE-A1-102013 205 170

## Beschreibung

Die vorliegende Erfindung betrifft eine Hängetasche nach dem Oberbegriff des Anspruchs 1.

Beispielsweise aus der EP 3 090 967 A2 oder der WO 2015/124524 A1 sind Hängetaschen bekannt, die so gestaltet sind, dass sie aus einer Transportstellung, in welcher der Fördergutaufnahmebereich weitgehend geschlossen ist und die beiden Taschenseitenwände im Wesentlichen vertikal nach unten hängen, durch Schwenken des Schwenkrahmens um die vorzugsweise horizontale Schwenkachse geöffnet werden können, etwa um Fördergut aufzunehmen oder abzugeben.

Die Druckschrift DE 10 2013 205170 A1 offenbart eine Hängetasche mit den Merkmalen des Oberbegriffs von Anspruch 1. Weiterhin wird auf die Druckschriften WO2014/012965 A1 und EP 2130968 A1 verwiesen, die Hängetaschen mit anders gestalteten Öffnungsmechanismen beschreiben. Aufgabe der vorliegenden Erfindung ist es, eine alternative Hängetasche bereitzustellen, die ebenfalls einen vergleichsweise einfachen Aufbau hat und im Betrieb in einer Hängefördereinrichtung mit einfachen Mitteln je nach Bedarf unterschiedlich weit zu öffnen ist.

Zur Lösung dieser Aufgabe wird eine Hängetasche mit den Merkmalen von Anspruch 1 vorgeschlagen.

Die Schwenkbetätigungseinrichtung kann mit einfachen Mitteln realisiert werden. Sie umfasst wenigstens ein schnurförmiges oder bandförmiges Element, welches so gestaltet und angeordnet ist, dass es bei Verdrängung des Verdrängungselements aus der Normalposition Zugkräfte auf den Schwenkrahmen ausübt, die letzteren relativ zum Hängerahmen im Sinne des Auseinanderklappens der Taschenseitenwände um die Schwenkachse verschwenken. So kann es gemäß einer bevorzugten Ausführungsform der Erfindung vorgesehen sein, dass die Schwenkbetätigungseinrichtung insgesamt im Wesentlichen von einem schnurförmigen oder bandförmigen Element gebildet ist. Das Verdrängungselement ist erfindungsgemäß ein Abschnitt des schnurförmigen oder bandförmigen Elements, der oberhalb des Hängerahmens verläuft, so dass es bei Transport der Hängetaschen in einer Hängefördereinrichtung von einer äußeren Störkontur oberhalb des Trägerabschnitts des Hängerahmens beaufschlagbar und dabei unter Zug setzbar ist, um ein Drehmoment in Bezug auf die Schwenkachse auf den Schwenkrahmen auszuüben, um diesen im Sinne des Auseinanderklappens der Taschenseitenwände relativ zum Hängerahmen zu verschwenken.

Das schnurförmige oder bandförmige Element ist gemäß der Erfindung mit seinen entgegengesetzten Enden an seitlich voneinander und von der Schwenkachse beabstandeten Randabschnitten des Schwenkrahmens befestigt, die in der stabilen Schwenkstellung des Schwenkrahmens bei in Transportstellung befindlicher Hängetasche untere Abschnitte des Schwenkrahmens bilden, wobei die Befestigungsstellen der Enden des schnurförmigen oder bandförmigen Elements auch bei in der stabilen Schwenkstellung befindlichem Schwenkrahmen so positioniert sind, dass durch das schnurförmige oder bandförmige Element übertragene Zugkräfte stets ein Drehmoment an den Schwenkrahmen anlegen, um diesen im Sinne des Auseinanderklappens der Taschenseitenwände um die Schwenkachse zu verschwenken.

Gemäß einer Ausführungsform der wie vorstehend erläutert einfach ausgestalteten Hängetasche ist mittig ein Trägerabschnitt des Hängerahmens, ein quer dazu bei in Transportstellung befindlicher Hängetasche nach oben abstehendes Anhängemittel angeordnet, wobei das schnurförmige oder bandförmige Element an seiner bei in Transportstellung befindlicher Hängetasche höchsten Stelle durch ein Loch des Anhängemittels verläuft. Auf diese Weise kann das schnurförmige oder bandförmige Element mit einfachen Mitteln so oberhalb des Hängerahmens geführt sein, dass es geeignete Verdrängungselemente oberhalb des Trägerelements des Hängerahmens bildet.

Gemäß einer einfachen Ausgestaltung der Erfindung kann die stabile Schwenkstellung des Schwenkrahmens entsprechend der Schließstellung der Hängetasche dadurch realisiert sein, dass der Schwerpunkt des Schwenkrahmens und aller damit verschwenkbaren Anhängsel so unterhalb der Schwenkachse liegt, dass sich der Schwenkrahmen stets unter Schwerkraftwirkung in die insoweit stabile Schwenkstellung begibt.

In einer weitergehenden Ausgestaltung der Erfindung ist der Schwenkrahmen in seiner stabilen Schwenkstellung relativ zu dem Hängerahmen bei zusammengeklappten Taschenseitenwänden mittels einer Arretiereinrichtung normalerweise arretiert, wobei die Arretiereinrichtung mittels der Schwenkbetätigungseinrichtung durch Beaufschlagung des Verdrängungselements mittels einer Störkontur oberhalb des Trägerabschnitts des Hängerahmens betätigbar ist, um die Arretierung zwischen Schwenkrahmen und Hängerahmen aufzuheben. Die Arretiereinrichtung kann in an sich bekannter Weise so gestaltet sein, wie es beispielsweise in der EP 3 090 967 A2 unter Bezugnahme auf die Figur 3 der EP 3 090 967 A2 erläutert ist. Dabei kommt es zu einer Entriegelung der Arretierung zwischen Hängerahmen und Schwenkrahmen, wenn der Schwenkrahmen aus seiner stabilen Schwenkstellung heraus zunächst relativ zum Hängerahmen angehoben wird.

Gemäß der vorliegenden Erfindung kann dieses Anheben ebenfalls vermittels der von dem schnurförmigen oder bandförmigen Element übertragenen Zugkräfte erfolgen. Der Schwenkrahmen ist vorzugsweise im Wesentlichen rechteckig mit abgerundeten Ecken gestaltet und aus einem Gestänge aus Leichtmetall oder/und Kunststoff gebildet. Die an dem Schwenkrahmen vorgesehene zweite Taschenseitenwand ist gemäß einer vorteilhaften Ausführungsform der Erfindung aus einem wenig elastischen Textilgewebe oder einer wenig elastischen Kunststofffolie gebildet, so dass sie bei einem gewünschten Auskippvorgang der Hängetasche darauf abgestütztes Fördergut in gewünschter Weise abrutschen lassen kann.

Der Hängerahmen ist vorzugsweise U-bügelförmig gestaltet, wobei der Trägerabschnitt die Basis- und die davon abstehenden Randabschnitte die U-Schenkel bilden. Der näherungsweise rechteckförmige Schwenkrahmen ist vorzugsweise in dem Bereich zwischen den U-Schenkeln des Hängerahmens aufgenommen, wobei ein jeweiliges Drehgelenk der Drehgelenkanordnung einen U-Schenkel des Hängerahmens mit einer jeweiligen Seite des Schwenkrahmens verbindet, wie dies an sich zum Beispiel aus der EP 3 090 967 A2 bereits bekannt war.

Die zweite Taschenseitenwand ist vorzugsweise zumindest bereichsweise aus einem elastisch nachgiebig ausbeulbaren Material gebildet, welches sich an Fördergut in der Hängetasche anschmiegen kann, um dieses gegen unerwünschte Bewegungen relativ zu der Hängetasche während des Förderguttransports zu schützen.

Gegenstand der Erfindung ist auch eine Hängefördereinrichtung gemäß Anspruch 6, wobei die Hängefördereinrichtung eine Transportleitelementanordnung, insbesondere aus Führungsschienen, aufweist und mit wenigstens einer Hängetasche nach einem der Ansprüche 1 bis 5 ausgestattet ist, die mit ihren Hängerahmen an der Transportleitanordnung in Transportstellung hängt oder anhängbar ist. Die Hängefördereinrichtung weist wenigstens eine vorzugsweise höhenbewegliche Störkontur auf, die bei in Transportstellung in der Hängefördereinrichtung bewegter Hängetasche in den Weg des Verdrängungselements der Hängetasche oberhalb des Trägerabschnitts ihres Hängerahmens bewegbar ist, um das Verdrängungselement aus seiner Normalposition bei Bewegung der Hängetasche relativ zu der Störkontur zu verdrängen und somit die beiden Taschenseitenwände der Hängetaschen auseinanderzuklappen. Die Störkontur kann beispielsweise ein in geeigneter Weise geformtes Gestänge sein, welches durch einen steuerbaren Antrieb in den Weg des Trägerabschnitts einer sich nähernden Hängetasche eingebracht werden kann, um von dem Trägerabschnitt bei dessen Weiterbewegung beaufschlagt zu werden. Soll keine Wechselwirkung zwischen einer sich nähernden Hängetasche und der Störkontur stattfinden, so kann letztere aus dem Weg des Trägerabschnitts der Hängetasche zurückgezogen sein. Als Antriebsmittel für die Störkontur kommt vorzugsweise ein steuerbarer Pneumatikzylinder in Frage. Auch elektromotorische Antriebsmittel oder hydraulische Antriebsmittel oder elektromagnetische Antriebsmittel sind zur Bewegung der Störkontur geeignet.

Eine solche Störkontur ist erfindungsgemäß normalerweise an einer Beladestation vorgesehen, um dort Hängetaschen durch Verschwenken des Schwenkrahmens relativ zum Hängerahmen oben zu öffnen, so dass Fördergut bequem in die Hängetasche eingebracht werden kann, sei dies manuell oder automatisch. Je nach Ausgestaltung der Hängefördereinrichtung kann auch die Aktivierung des Störkonturantriebs manuell oder automatisch erfolgen, wobei ein übergeordnetes Steuersystem der Hängefördereinrichtung die Steuerung des Störkonturantriebs ausführt. Die vorzugsweise vertikal bewegbare Störkontur kann so gestaltet sein, dass sie den Verdrängungsabschnitt einer wie beim Transport in der Hängefördereinrichtung passierenden Hängetasche nur um einen bestimmten Betrag aus dessen Normalposition heraus verdrängen kann, so dass die Hängetasche um ein damit korrespondierendes bestimmtes Maß geöffnet wird.

Insbesondere an einer Entladestation kann eine bewegliche Störkontur vorgesehen und so gestaltet sein, dass sie den Verdrängungsabschnitt einer sie beim Transport in der Hängefördereinrichtung beaufschlagenden Hängetasche um ein maximales Maß verdrängen kann, bei welchem der Schwenkrahmen relativ zu dem Hängerahmen eine Schwenkstellung einnimmt, die einer Auskippstellung der Hängetasche entspricht. In dieser Auskippstellung kann etwaiges Fördergut längs der ersten Taschenseitenwand nach unten abrutschen, weil die Hängetasche entsprechend weit geöffnet ist.

Ausführungsformen der Erfindung sind nachstehend unter Bezugnahme auf die Figuren erläutert.
- Figur 1: zeigt in einer perspektivischen Darstellung die Rahmenstruktur einer Hängetasche nach der Erfindung, d. h. eine Hängetasche nach der Erfindung unter Weglassung der Taschenseitenwände, wobei der Schwenkrahmen in seiner dem Schließzustand der Hängetasche entsprechenden stabilen Schwenkstellung ist.
- Figur 2: zeigt die Hängetaschenstruktur aus Figur 1 in einem Zustand, in dem der Schwenkrahmen relativ zum Hängerahmen so verschwenkt ist, dass die Hängetasche oben geöffnet ist.
- Figur 3: zeigt ausschnittsweise und teils schematisch eine Hängefördereinrichtung nach der Erfindung mit erfindungsgemäßen Hängetaschen und einer Beladestation in perspektivischer Darstellung.
- Figur 4: zeigt eine weitere ausschnittsweise und teils schematisch dargestellte Hängefördereinrichtung nach der Erfindung mit einer Entladestation.
- Figur 5a und Figur 5b: zeigen ein Drehgelenk einer Hängetasche mit Arretiereinrichtung zur Festlegung des Schwenkrahmens in seiner stabilen Grundstellung.

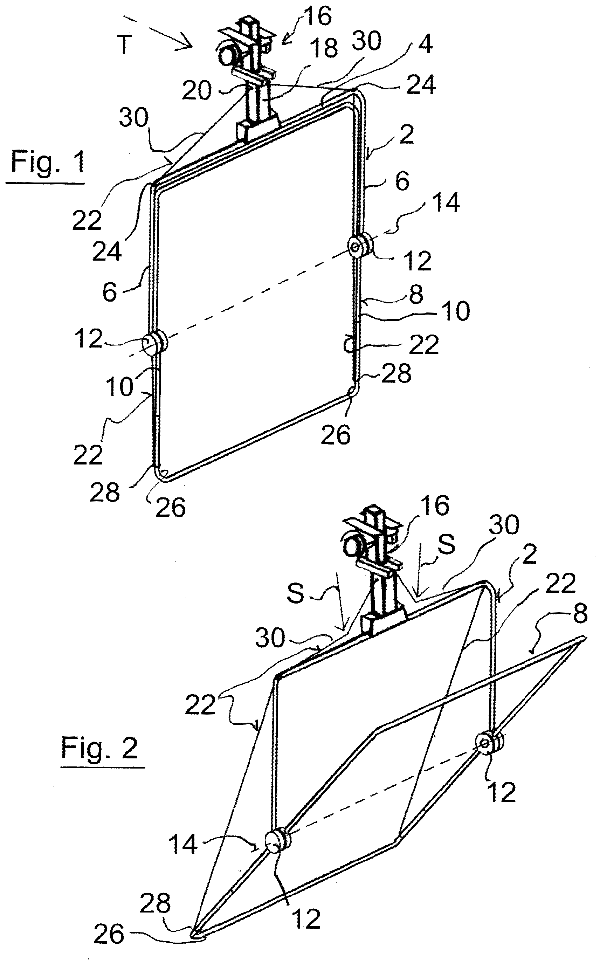

Gemäß Figur 1 umfasst die Rahmenstruktur der Hängetasche 1 einen U-förmigen Hängerahmen 2 mit einem oberen Trägerabschnitt 4 und zwei in der gezeigten Transportstellung der Hängetasche nach unten abstehenden U-Schenkeln 6 als Randabschnitte. Innerhalb des U-förmigen Hängerahmens 2 ist gemäß Figur 1 ein im Wesentlichen rechteckförmiger Schwenkrahmen 8 aufgenommen, wobei die einander parallelen Längsseiten 10 des an seinen Ecken abgerundeten Schwenkrahmens 8 über ein jeweiliges Drehgelenk 12 mit dem Hängerahmen 2 verbunden sind, so dass der Schwenkrahmen 8 um die in der gezeigten Transportstellung im Wesentlichen horizontale Schwenkachse 14 verschwenkbar ist, um die Hängetasche zu öffnen, wie dies beispielsweise in Figur 2 erkennbar ist.

An dem Trägerabschnitt 4 des Hängerahmens 2 ist ein davon nach oben abstehendes Anhängemittel 16 zum Anhängen der Hängetasche an eine Laufschiene einer Hängefördereinrichtung vorgesehen. Dabei handelt es sich bei dem Anhängemittel im Beispielsfall um ein an sich bekanntes Rollenlaufwerk, wie dies beispielsweise auch bereits in der EP 3 090 967 A2 dargestellt ist.

Das Rollenlaufwerk 16 weist einen Sockel 18 mit einem Durchgangsloch 20 auf, welches sich quer zur normalen Transportbewegungsrichtung T der Hängetasche in einer Hängefördereinrichtung erstreckt.

In den Figuren 1 und 2 ist eine besonders einfach ausgestaltete Schwenkbetätigungseinrichtung erkennbar, mittels welcher der Schwenkrahmen 8 aus seiner in Figur 1 gezeigten stabilen Schwenkstellung heraus bewegbar ist. Die Schwenkbetätigungseinrichtung besteht im Wesentlichen aus einem in bestimmter Weise an der Rahmenstruktur verlaufenden schnurförmigen oder bandförmigen Element 22, welches im Folgenden auch einfach als Schnur 22 bezeichnet ist.

Die Schnur 22 verläuft an ihrer obersten Stelle an der in Transportstellung befindlichen Hängetasche durch die Durchgangsöffnung 20 des Sockels 18 des Rollenlaufwerks 16. Beidseitig des Sockels 18 erstreckt sich die Schnur 22 zu Durchgangslöchern 24 in den äußeren Schulterbereichen des Hängerahmens 2. Die Schnur 22 ist durch diese Durchgangslöche 24 hindurch geführt und erstreckt sich im weiteren Verlauf zu einem jeweiligen unteren Abschnitt 26 des Schwenkrahmens 8. An diesen unteren Abschnitten 26 des Schwenkrahmens ist die Schnur 22 mit ihren entgegengesetzten Enden 28 befestigt. Die Schnurr 22 verläuft auch in der in Figur 1 gezeigten Schließstellung der Rahmenstruktur der Hängetasche so rückwärtig der Schwenkachse 14, dass sie die Schwenkachse 14 nicht schneidet. Dies hat zur Folge, dass eine von der Schnur 22 über deren Enden 28 auf den Schwenkrahmen 8 übertragene Zugkraft stets ein Drehmoment mit Zug auf die Schwenkachse 14 erzeugt, welches den Schwenkrahmen 8 aus seiner in Figur 1 gezeigten stabilen Grundstellung heraus verschwenkt, um die Hängetasche zu öffnen. Solange keine Zugkraft über die Schnur 22 auf den Schwenkrahmen 8 ausgeübt wird, neigt dieser aufgrund seines unterhalb der Schwenkachse 14 liegenden Schwerpunktes dazu, in die in Figur 1 gezeigte stabile Grundstellung aufgrund Schwerkraftwirkung einzurücken. In anderen Ausführungsformen kann das Einrücken des Schwenkrahmens in die stabile Grundschenkstellung federunterstützt sein.

Die oberhalb des Trägerabschnitts 4 in Figur 1 schräg verlaufenden Abschnitte 30 der Schnur 22 bilden symmetrisch zu dem Sockel 18 verlaufende Verdrängungselement oder Verdrängungsabschnitte der Schwenkbetätigungseinrichtung, deren Funktion und Wirkung gut in Figur 2 erkennbar sind. Die Pfeile S in Figur 2 repräsentierten Kräfte, welche die Verdrängungsabschnitte 30 aus ihrer in Figur 1 gezeigten Normalposition in der Weise verdrängen, dass die Schnur 22 zunehmend gespannt wird und dabei eine Zugkraft über ihre Enden 28 auf die unteren Abschnitte 26 des Schwenkrahmens 8 ausübt. Es ist aus Figur 2 leicht nachvollziehbar, dass das Maß der Verdrängung der Verdrängungsabschnitte 30 das Maß der Öffnungsweite der Hängetasche bestimmt, d.h. je weiter die Verdrängungsabschnitte 30 aus ihrer Normalposition verdrängt werden, desto weiter wird die Hängetasche geöffnet.

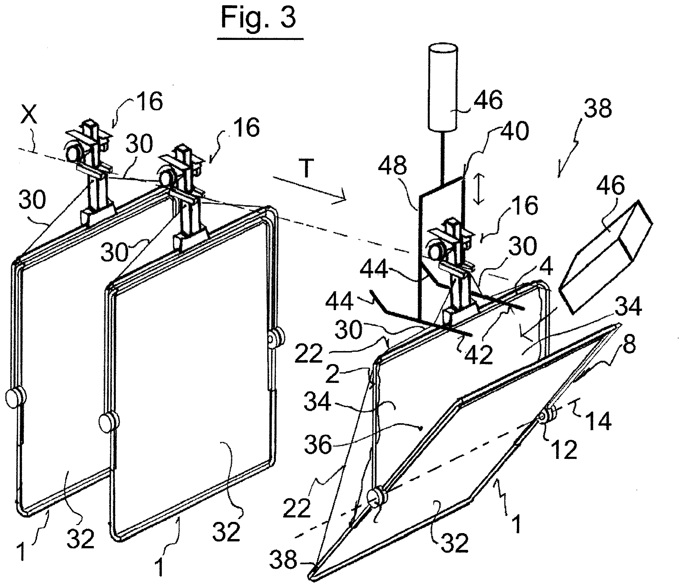

Figur 3 zeigt Hängetaschen 1 mit einer Rahmenstruktur gemäß Figur 1 bzw. Figur 2 in einer mehr schematisch dargestellten Hängefördereinrichtung. Die Hängetaschen 1 hängen in ihren Rollenlaufwerken 16 an einer durch die unterbrochene Linie X schematisch symbolisierte Laufschiene der Hängefördereinrichtung, so dass sie in Transportrichtung T bewegbar sind. Als Bewegungsantrieb kommt insbesondere ein Reibbandantrieb in Frage, wie dies an sich aus dem Stand der Technik bekannt ist.

Die Hängetaschen weisen jeweils eine an dem Schwenkrahmen 8 vorgesehene und davon eingefasste erste Taschenseitenwand 32 aus einem schwach gespannten Textil auf. Eine zweite Taschenseitenwand 34 ist einerseits oben an dem Trägerabschnitt 4 des Hängerahmens 2 befestigt und erstreckt sich nach unten hin zu dem Schwenkrahmen 8, an dem sie gegenüberliegend zur ersten Taschenseitenwand mit ihren von dem Trägerabschnitt 4 entfernten unteren Endabschnitt gehalten und mit der ersten Taschenseitenwand 32 unter Bildung eines Fördergutaufnahmebereichs 36 der Hängetaschen verbunden ist. Die zweite Taschenseitenwand 34 ist aus einem elastisch nachgiebig ausbeulbaren Material gebildet, welches sich ggf. an Fördergut in der Hängetasche anschmiegen kann, um dieses in geschützter Lage zu transportieren.

In Figur 3 ist eine Beladestation 38 der Hängefördereinrichtung dargestellt, wobei eine Beladestation 38 ein vertikal gesteuert hin- und herbewegbares Gestänge als Störkonturelement 40 vorgesehen ist. Als Verstellantrieb des Störkonturelements 40 ist im Beispielsfall ein Pneumatikzylinder 46 vorgesehen, der von einer übergeordneten Steuereinrichtung der Hängefördereinrichtung gesteuert wird. Das Störkonturelement 40 weist an seinem unteren Ende zwei kufenförmige Stangen 42 auf, die sich mit einem in Transportrichtung T der Hängetaschen 1 vorderen Abschnitt parallel zur Transportrichtung T erstrecken und in einem rückwärtigen Abschnitt eine jeweilige Einlaufschräge 44 aufweisen. In der in Figur 3 gezeigten abgesenkten Stellung des Störkonturelements 40 bilden diese Einlaufschrägen 44 Störkonturen für die Verdrängungsabschnitte 30 der Schnur 22 einer sich der Beladestation 38 nähernden Hängetasche.

In Figur 3 ist eine in der Beladestation 38 befindliche Hängetasche gezeigt, bei welcher die Verdrängungsabschnitte 30 zunächst bei Beaufschlagung der Einlaufschrägen 44 tendenziell nach unten hin verdrängt wurden, bis sie den in Figur 3 gezeigten Spannungszustand erreicht hatten. Dabei ist die betreffende Hängetasche 1 in der Beladestation 38 geöffnet worden, so dass Fördergut 46, etwa in Form eines Pakets, durch die obere Taschenöffnung in den Fördergutaufnahmebereich 36 der Hängetasche eingebracht werden kann. Der in Figur 3 gezeigte Öffnungszustand der in der Beladestation 38 befindlichen Hängetasche 1 bleibt bei fortgesetzter Transportbewegung dieser Hängetasche solange aufrecht erhalten, bis die Verdrängungsabschnitte 30 von dem Störkonturelement 40 freikommen, woraufhin die Hängetasche 1 aufgrund der Schwerkraftwirkung wieder in ihren Schließzustand zurückfällt, in welchem der Schwenkarm 8 zumindest tendenziell wieder seine stabile Schwenkstellung einnimmt.

Außerhalb der Beladestation 38 sind in Figur 3 zwei sich längs der Transportrichtung T der Beladestation 38 annähernde geschlossene Hängetaschen H gezeigt, die im weiteren Verlauf der Transportbewegung die Beladestation 38 passieren und dort in der schon beschriebenen Weise für das Einbringen von Fördergut geöffnet werden. Die symmetrisch paarweise einander zugeordneten Stangen 42 und Verdrängungselemente 30 sorgen für eine Lagestabilisierung der Hängetasche 1 in der Transportstellung beim Durchgang durch die Beladestation 38.

Soll eine Hängetasche die Beladestation 38 unbeeinflusst durchlaufen, so kann zu diesem Zweck das Störkonturelement 40 mittels des Hydraulikzylinders 46 angehoben werden, so dass es aus dem Weg der Verdrängungsabschnitte 30 der betreffenden Hängetasche entfernt ist.

Figur 3 lässt auch erkennen, dass die kufenförmigen Stangen 42 an einem Halterahmen 48 des Störkonturelements 40 befestigt sind, der so gestaltet ist, dass er auch bei abgesenktem Störkonturelement 40 das Rollenlaufwerk 16 ungehindert durchlässt. Wie bereits angedeutet, kann der Antrieb 46 des Störkonturelements 40 manuell durch eine Bedienungsperson ausgelöst werden, die beispielsweise auch manuell Fördergut 46 in die jeweils geöffnete Hängetasche einbringen kann. In einer alternativen Ausgestaltung kann der Betrieb des Störkonturelementantriebs 46 auch gesteuert automatisiert ablaufen. Dabei können Sensormittel, beispielsweise Lichtschranken oder dergleichen, vorgesehen sein, welche den korrekten Ablauf der Zuführung und Ableitung von Hängetaschen zur bzw. von der Beladestation 38 überwachen.

Hinzuzufügen ist auch noch, dass gemäß einer Betriebsweise des Störkonturelements 40 dieses auch wieder angehoben werden kann, um eine in der Beladestation 38 abgefertigte Hängetasche 1 zu verschließen, bevor diese an den kufenförmigen Schienen vorbeigekommen ist. Auch können Mittel vorgesehen sein, welche die Hängetaschen im Bereich der Beladestation abbremsen, um sie zu stoppen oder nur zu verlangsamen.

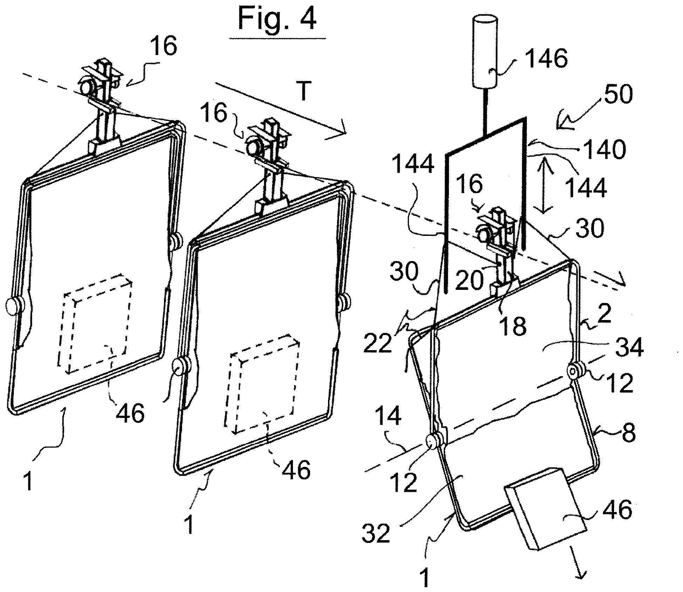

Figur 4 zeigt in einer entsprechend schematischen Perspektivdarstellung wie in Figur 3 einen Bereich einer Hängefördereinrichtung nach der Erfindung, welche eine Entladestation 50 umfasst. Die Entladestation 50 hat ein Störkonturelement 140 in Form eines nach unten offenen U-förmigen Rahmens, dessen Rahmenschenkel 144 bei abgesenktem Störkonturelement 140 eine Störkontur für Verdrängungsabschnitte 30 von längs der Transportrichtung T die Entladestation erreichenden Hängetaschen 1 darstellt. Die Störkonturen 144 halten die Verdrängungsabschnitte 30 der betreffenden Schnur 22 einer die Entladestation 50 fortgesetzt durchlaufenden Hängetasche um ein größeres Maß zurück, so dass es zu der in Figur 4 rechts gezeigten Situation kommt, in der der Schwenkrahmen 8 so weit aus seiner stabilen Grundschwenkstellung heraus verschwenkt wird, dass die Hängetasche 1 in der Entladestation 50 extrem weit geöffnet wird und die erste Taschenseitenwand zur Öffnungsseite hin nach unten schräg verläuft, so dass darauf befindliches Fördergut 46 nach unten aus der Tasche herausrutschen kann, um dort in einen Behälter oder zu einer weiteren Bearbeitungsstation zu gelangen.

Zum Schließen der Hängetasche 1 in der Entladestation 50 wird dann das Störkonturelement 140 durch Aktivierung des Pneumatikzylinders 146 wieder angehoben, so dass es die Verdrängungsabschnitte 30 wieder freigibt und der Schwenkrahmen 8 daraufhin wieder in seine stabile Grundstellung unter Schwerkraftwirkung zurückschwenken kann.

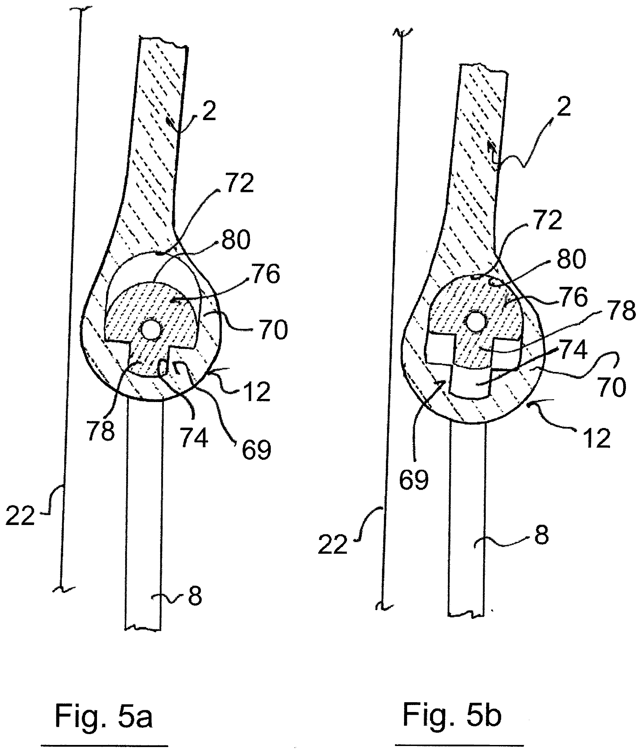

In den Figuren 5a und 5b ist eine Arretiereinrichtung 69 zur Fixierung des Schwenkrahmens 8 relativ zum Hängerahmen 2 in der stabilen Grundstellung des Schwenkrahmens 8 dargestellt, wie sie im Rahmen der vorliegenden Erfindung bei einem entsprechenden Ausführungsbeispiel verwendbar ist.

Die Figuren 5a und 5b zeigen Schnittdarstellungen mit Querschnitt durch ein betreffendes abgewandeltes Drehgelenk 12. Das Drehgelenk 12 weist ein Auge 70 auf, welches in einem oberen Bereich eine kreisabschnittsförmige Ausnehmung oder Lagerfläche 72 - und im unteren Bereich eine Rastausnehmung 74 aufweist. Das Auge 70 ist drehfest mit dem Hängerahmen 2 verbunden. Ein in dem Gelenkauge 70 aufgenommenes Gelenkzapfenelement 76 mit Verriegelungsvorsprung 78 ist drehfest mit dem Schwenkrahmen 8 verbunden. Das Zapfenelement 76 ist bereichsweise komplementär zu dem es aufnehmenden Auge 70 geformt, wobei es im oberen Bereich eine dem Kreisabschnitt 72 des Gelenkauges 70 angepasste Kreisabschnittsform 80 - und im unteren Bereich den Verriegelungsvorsprung 78 aufweist, der der Verriegelungsausnehmung 74 des Auges 70 angepasst ist. Durch Anheben des Schwenkrahmens 8 relativ zum Hängerahmen 2 gelangt das Gelenkzapfenelement 76 mit seinem Verriegelungsvorsprung 78 aus der Verriegelungsausnehmung 74 heraus und gelangt schließlich mit seiner abgerundeten Oberseite eine komplementäre Lagerfläche 72 des Gelenkauges 70, wie dies in Figur 5b erkennbar ist. In dem Zustand gemäß Figur 5b ist die Arretiereinrichtung entriegelt, so dass der Schwenkrahmen 8 relativ zum Hängerahmen 2 verschwenkt werden kann. Im Zustand der Figur 5a ist die Arretiereinrichung im Verriegelungszustand, so dass der in seiner stabilen Grundstellung abgesenkte Schwenkrahmen 8 nicht ohne weiteres relativ zum Hängerahmen 2 verschwenkt werden kann. Das Anheben des Schwenkrahmens 8 erfolgt bei Ausübung einer Zugkraft vermittels einer betreffenden Schnur 22 der Schwenkbetätigungseinrichtung automatisch in Folge der Verdrängung des Verdrängungsabschnittes der Schnur durch eine betreffende Störkontur. Sobald die Verdrängung des Verdrängungsabschnittes der Schnur 22 beendet ist, kann der Schwenkrahmen 8 wieder in seine ursprüngliche Grundschwenkstellung zurückkippen, wobei er dann automatisch wieder an dem Hängerahmen 2 mittels der Arretiereinrichtung verriegelt wird.

## Patentansprüche

1. Hängetasche (1) als Fördergutbehälter zum Transport von Fördergut in einer Hängefördereinrichtung, mit
- einem Hängerahmen (2) zum Anhängen der Hängetasche in einer Transportstellung an ein Transportleitelement (X) der Hängefördereinrichtung, wobei der Hängerahmen (2) zwei in der Transportstellung der Hängetasche in einem seitlichen Abstand voneinander von einem oberen Trägerabschnitt (4) nach unten verlaufende Randabschnitte (6) aufweist,
- einem Schwenkrahmen (8),
- einer im Bereich der nach unten verlaufenden Randabschnitte (6) des Hängerahmens (2) angeordneten Drehgelenkanordnung (12, 12), mittels welcher der Schwenkrahmen (8) schwenkbeweglich um eine Schwenkachse (14) an dem Hängerahmen (2) gelagert ist, wobei die Schwenkachse (14) zumindest näherungsweise horizontal verläuft, wenn die Hängetasche in ihrer Transportstellung ist,
- einer an dem Schwenkrahmen (8) vorgesehenen und davon zumindest bereichsweise eingefassten ersten Taschenseitenwand (32) und
- einer einerseits mit dem Trägerabschnitt (4) des Hängerahmens (2) und andererseits mit dem Schwenkrahmen (8) verbundenen zweiten Taschenseitenwand (34), wobei die beiden Taschenseitenwände (32, 34) einander gegenüberliegend einen Förderergutaufnahmebereich (36) zwischen sich begrenzen und zum Öffnen und Schließen der Hängetasche durch Verschwenken des Schwenkrahmens (8) relativ zum Hängerahmen (2) auseinanderklappbar und zusammenklappbar sind, wobei der Schwenkrahmen (8) eine dem Schließzustand der Hängetasche entsprechende stabile Schwenkstellung an dem Hängerahmen (2) aufweist,
- einer Schwenkbetätigungseinrichtung, mittels welcher der Schwenkrahmen (8) aus seiner stabilen Schwenkstellung herausbewegbar ist, wobei die Schwenkbetätigungseinrichtung ein in der Transportstellung der Hängetasche oberhalb des Trägerabschnitts (4) angeordnetes Verdrängungselement (30) aufweist, welches dazu bestimmt und eingerichtet ist, aus einer der stabilen Schwenkstellung des Schwenkrahmens (8) entsprechenden Normalposition verdrängt zu werden, wenn es beim Transport der Hängetasche in einer Hängefördereinrichtung von einer äußeren Störkontur (40; 140) beaufschlagt wird, wobei es je nach Grad der Verdrängung aus der Normalposition den Schwenkrahmen (8) relativ zum Hängerahmen (2) im Sinne des Auseinanderklappens der Taschenseitenwände (32, 34) verschwenkt, um die Hängetasche entsprechend weit zu öffnen,
**dadurch gekennzeichnet, dass**
die Schwenkbetätigungseinrichtung wenigstens ein schnurförmiges oder bandförmiges Element (22) umfasst, welches so gestaltet und angeordnet ist, dass es bei Verdrängung des Verdrängungselementes (30) aus der Normalposition Zugkräfte auf den Schwenkrahmen (8) ausübt, die letzteren relativ zum Hängerahmen (2) im Sinne des Auseinanderklappens der Taschenseitenwände (32, 34) um die Schwenkachse (14) verschwenken, wobei das Verdrängungselement (30) von einem Abschnitt des schnurförmigen oder bandförmigen Elementes (22) gebildet ist, wobei dieser Abschnitt oberhalb des Hängerahmens verläuft, so dass es bei Transport der Hängetasche in einer Hängefördereinrichtung von einer äußeren Störkontur (40; 140) oberhalb des Trägerabschnitts (4) des Hängerahmens (2) beaufschlagbar ist, wobei
das schnurförmige oder bandförmige Element (22) mit seinen entgegengesetzten Enden (28) an seitlich voneinander und von der Schwenkachse (14) beabstandeten Randabschnitten (26) des Schwenkrahmens (8) befestigt ist, die in der stabilen Schwenkstellung des Schwenkrahmens (8) bei in Transportstellung befindlicher Hängetasche untere Abschnitte des Schwenkrahmens (8) bilden.

2. Hängetasche nach Anspruch 1, **dadurch gekennzeichnet, dass** der Schwenkrahmen (8) in seiner stabilen Schwenkstellung relativ zu dem Hängerahmen (2) bei zusammengeklappten Taschenseitenwänden mittels einer Arretiereinrichtung (74, 78) normalerweise arretiert ist, wobei die Arretiereinrichtung mittels der Schwenkbetätigungseinrichtung durch Beaufschlagung des Verdrängungselementes (30) der Schwenkbetätigungseinrichtung mittels einer Störkontur (40; 140) betätigbar ist, um die Arretierung zwischen Schwenkrahmen (8) und Hängerahmen (2) aufzuheben.

3. Hängetasche nach Anspruch 1 oder 2, **dadurch gekennzeichnet, dass** mittig an dem Trägerabschnitt (4) des Hängerahmens (2) ein quer dazu und bei in Transportstellung befindlicher Hängetasche nach oben abstehendes Anhängmittel (16) angeordnet ist, wobei das schnurförmige oder bandförmige Element (22) an seiner bei in Transportstellung befindlicher Hängetasche höchsten Stelle durch eine Loch (20) des Anhängmittels (16) verläuft.

4. Hängetasche nach einem der vorhergehenden Ansprüche, **dadurch gekennzeichnet, dass** zumindest die zweite Taschenseitenwand (34) zumindest bereichsweise aus einem elastisch nachgiebig ausbeulbaren Material gebildet ist.

5. Hängetasche nach einem der vorhergehenden Ansprüche, **dadurch gekennzeichnet, dass** die erste Taschenseitenwand (32) aus einem wenig elastischen Textilgewebe oder einer wenig elastischen Kunststofffolie gebildet ist.

6. Hängefördereinrichtung mit einer Transportleitelementanordnung (X), insbesondere aus Führungsschienen, und mit wenigstens einer Hängetasche (1) nach einem der Ansprüche 1 bis 5, welche mit ihrem Hängerahmen (2) an der Transportleitelementanordnung in Transportstellung hängt oder anhängbar ist, und mit wenigstens einer beweglichen Störkontur (40; 140), die bei in Transportstellung in der Hängefördereinrichtung bewegter Hängetasche in den Weg des Verdrängungselementes (30) der Hängetasche bewegbar ist, um das Verdrängungselement (30) aus seiner Normalposition bei Bewegung der Hängetasche relativ zu der Störkontur (40; 140) zu verdrängen und somit die beiden Taschenseitenwände (32,34) der Hängetaschen auseinander zu klappen.

7. Hängefördereinrichtung nach Anspruch 6, **dadurch gekennzeichnet, dass** die bewegliche Störkontur (40; 140) so gestaltet ist, dass sie das Verdrängungselement (30) einer sie beim Transport in der Hängefördereinrichtung passierenden Hängetasche nur um einen bestimmten Betrag aus dessen Normalposition heraus verdrängen kann.

8. Hängefördereinrichtung nach Anspruch 6 oder 7, **dadurch gekennzeichnet, dass** die bewegliche Störkontur (40; 140) so gestaltet ist, dass sie das Verdrängungselement (30) einer sie beim Transport in der Hängefördereinrichtung beaufschlagenden Hängetasche (1) um ein maximales Maß verdrängen kann, bei welchem der Schwenkrahmen (8) relativ zu dem Hängerahmen (2) eine Schwenkstellung einnimmt, die einer Auskippstellung der Hängetasche entspricht.

## Claims

1. Suspension bag (1) as a conveyed-goods container for transporting conveyed goods in a suspension conveying device, comprising
- a suspension frame (2) for suspending the suspension bag in a transport position from a transport guide element (X) of the suspension conveying device, the suspension frame (2) having two edge portions (6) which extend downwards from an upper support portion (4) at a lateral distance from one another when the suspension bag is in the transport position,
- a pivot frame (8),
- a rotational-joint arrangement (12, 12) which is arranged in the region of the edge portions (6) of the suspension frame (2) which extend downwards and by means of which the pivot frame (8) is mounted on the suspension frame (2) such that it can pivot about a pivot axis (14), the pivot axis (14) extending at least approximately horizontally when the suspension bag is in its transport position,
- a first bag side wall (32) provided on the pivot frame (8) and at least partially enclosed thereby and
- a second bag side wall (34) connected both to the support portion (4) of the suspension frame (2) and to the pivot frame (8), the two bag side walls (32, 34), lying opposite one another, delimiting a conveyed-goods receiving region (36) therebetween and being capable of being folded apart and folded together for opening and closing the suspension bag by pivoting the pivot frame (8) relative to the suspension frame (2), the pivot frame (8) having a stable pivot position on the suspension frame (2) which corresponds to the closed state of the suspension bag,
- a pivot actuation device by means of which the pivot frame (8) can be moved out of its stable pivot position, the pivot actuation device having a displacement element (30) which is arranged above the support portion (4) in the transport position of the suspension bag and which is intended and designed to be displaced from a normal position corresponding to the stable pivot position of the pivot frame (8) when, during transport of the suspension bag in a suspension conveying device, it is acted upon by an external interference contour (40; 140), wherein, depending on the degree of displacement from the normal position, said element pivots the pivot frame (8) relative to the suspension frame (2) to bring about the folding apart of the bag side walls (32, 34) in order to open the suspension bag sufficiently wide, **characterised in that** the pivot actuation device comprises at least one cord-like or band-like element (22) which is designed and arranged in such a way that, when the displacement element (30) is displaced from the normal position, it exerts tensile forces on the pivot frame (8) which pivot said frame about the pivot axis (14) relative to the suspension frame (2) to bring about the folding apart of the bag side walls (32, 34), the displacement element (30) being formed by a portion of the cord-like or band-like element (22), this portion extending above the suspension frame so that it can be acted on by an external interference contour (40; 140) above the support portion (4) of the suspension frame (2) during transport of the suspension bag in a suspension conveying device, the cord-like or band-like element (22) being fastened at its opposite ends (28) to edge portions (26) of the pivot frame (8) which are spaced apart laterally from one another and from the pivot axis (14), and which form lower portions of the pivot frame (8) in the stable pivot position of the pivot frame (8) when the suspension bag is in the transport position.

2. Suspension bag according to claim 1, **characterised in that** the pivot frame (8) is normally locked in its stable pivot position relative to the suspension frame (2) by means of a locking device (74, 78) when the bag side walls are folded together, the locking device being actuatable by means of the pivot actuation device by acting on the displacement element (30) of the pivot actuation device by means of an interference contour (40; 140) in order to release the locking between the pivot frame (8) and the suspension frame (2).

3. Suspension bag according to claim 1 or 2, **characterised in that** centrally on the support portion (4) of the suspension frame (2) there is a suspension means (16) which projects transversely thereto and upwards when the suspension bag is in the transport position, the cord-like or band-like element (22) extending through a hole (20) in the suspension means (16) at the highest point of said element when the suspension bag is in the transport position.

4. Suspension bag according to any of the preceding claims, **characterised in that** at least the second bag side wall (34) is formed at least in regions from an elastically resiliently expandable material.

5. Suspension bag according to any of the preceding claims, **characterised in that** the first bag side wall (32) is formed from a low-elasticity textile fabric or a low-elasticity plastic film.

6. Suspension conveying device comprising a transport guide element arrangement (X), in particular consisting of guide rails, and comprising at least one suspension bag (1) according to any of claims 1 to 5 which is or can be suspended by its suspension frame (2) from the transport guide element arrangement in the transport position, and comprising at least one movable interference contour (40; 140) which, when the suspension bag is moved in the transport position in the suspension conveying device, can be moved into the path of the displacement element (30) of the suspension bag in order to displace the displacement element (30) from its normal position when the suspension bag moves relative to the interference contour (40; 140) and thus to fold apart the two bag side walls (32, 34) of the suspension bags.

7. Suspension conveying device according to claim 6, **characterised in that** the movable interference contour (40; 140) is designed in such a way that it can only displace the displacement element (30) of a suspension bag passing it during transport in the suspension conveying device by a certain amount from its normal position.

8. Suspension conveying device according to claim 6 or 7, **characterised in that** the movable interference contour (40; 140) is designed in such a way that it can displace the displacement element (30) of a suspension bag (1) that acts on it during transport in the suspension conveying device by a maximum amount at which the pivot frame (8) assumes a pivot position relative to the suspension frame (2) which corresponds to a tipping-out position of the suspension bag.

## Revendications

1. Dossier suspendu (1) comme récipient de matière à transporter pour le transport de matière à transporter dans un dispositif de transport suspendu, avec
- un cadre suspendu (2) pour la suspension du dossier suspendu dans une position de transport sur un élément de conduite de transport (X) du dispositif de transport suspendu, dans lequel le cadre suspendu (2) présente deux sections de bord (6) s'étendant vers le bas dans la position de transport du dossier suspendu à une distance latérale l'une de l'autre d'une section de support (4) supérieure,
- un cadre de pivotement (8),
- un agencement d'articulation rotative (12, 12) agencé dans la zone des sections de bord (6) s'étendant vers le bas du cadre suspendu (2), au moyen duquel le cadre de pivotement (8) est logé de manière mobile en pivotement autour d'un axe de pivotement (14) au niveau du cadre suspendu (2), dans lequel l'axe de pivotement (14) s'étend au moins approximativement horizontalement,
lorsque le dossier suspendu est dans sa position de transport,
- une première paroi latérale de dossier (32) prévue au niveau du cadre de pivotement (8) et bordée par celui-ci au moins par endroits et
- une deuxième paroi latérale de dossier (34) reliée d'une part à la section de support (4) du cadre suspendu (2) et d'autre part au cadre de pivotement (8), dans lequel les deux parois latérales de dossier (32, 34) limitent à l'opposé l'une de l'autre une zone de réception de matière à transporter (36) entre elles et peuvent être dépliées et repliées pour l'ouverture et la fermeture du dossier suspendu par pivotement du cadre de pivotement (8) par rapport au cadre suspendu (2), dans lequel le cadre de pivotement (8) présente une position de pivotement stable correspondant à l'état de fermeture du dossier suspendu au niveau du cadre suspendu (2),
- un dispositif d'actionnement de pivotement, au moyen duquel le cadre de pivotement (8) peut être déplacé hors d'une position de pivotement stable, dans lequel le dispositif d'actionnement de pivotement présente un élément de déplacement (30) agencé dans la position de transport du dossier suspendu au-dessus de la section de support (4), qui est destiné et conçu afin d'être déplacé d'une position normale correspondant à la position de pivotement stable du cadre de pivotement (8), lorsqu'il est sollicité lors du transport du dossier suspendu dans un dispositif de transport suspendu par un contour perturbateur (40 ; 140) extérieur, dans lequel il fait pivoter selon le degré de déplacement de la position normale le cadre de pivotement (8) par rapport au cadre suspendu (2) au sens du dépliement des parois latérales de dossier (32, 34) afin d'ouvrir largement le dossier suspendu de manière correspondante,
**caractérisé en ce que**
le dispositif d'actionnement de pivotement comporte au moins un élément (22) en forme de cordon ou de bande qui est conçu et agencé de sorte qu'il exerce lors du déplacement de l'élément de déplacement (30) de la position normale, des forces de traction sur le cadre de pivotement (8), qui font pivoter ce dernier par rapport au cadre suspendu (2) au sens du dépliement des parois latérales de dossier (32, 34) autour de l'axe de pivotement (14), dans lequel l'élément de déplacement (30) est formé par une section de l'élément (22) en forme de cordon ou de bande, dans lequel cette section s'étend au-dessus du cadre suspendu de sorte qu'il puisse être sollicité lors du transport du dossier suspendu dans un dispositif de transport suspendu par un contour perturbateur (40 ; 140) extérieur au-dessus de la section de support (4) du cadre suspendu (2), dans lequel l'élément (22) en forme de cordon ou de bande est fixé avec ses extrémités (28) opposées aux sections de bord (26) du cadre de pivotement (8) espacées latéralement l'une de l'autre et de l'axe de pivotement (14) qui forment dans la position de pivotement stable du cadre de pivotement (8), en cas de dossier suspendu se trouvant en position de transport, des sections inférieures du cadre de pivotement (8).

2. Dossier suspendu selon la revendication 1, **caractérisé en ce que** le cadre de pivotement (8) est arrêté normalement dans sa position de pivotement stable par rapport au cadre suspendu (2) en cas de parois latérales de dossier repliées au moyen d'un dispositif d'arrêt (74, 78), dans lequel le dispositif d'arrêt peut être actionné au moyen du dispositif d'actionnement de pivotement par sollicitation de l'élément de déplacement (30) du dispositif d'actionnement de pivotement au moyen d'un contour perturbateur (40 ; 140) afin de supprimer l'arrêt entre le cadre de pivotement (8) et le cadre suspendu (2).

3. Dossier suspendu selon la revendication 1 ou 2, **caractérisé en ce qu'**un moyen suspendu (16) s'élevant vers le haut est agencé au milieu sur la section de support (4) du cadre suspendu (2) et transversalement à celui-ci en cas de dossier suspendu se trouvant en position de transport, dans lequel l'élément (22) en forme de cordon ou de bande s'étend en son endroit le plus haut en cas de dossier suspendu se trouvant en position de transport à travers un trou (20) du moyen suspendu (16).

4. Dossier suspendu selon l'une quelconque des revendications précédentes, **caractérisé en ce qu'**au moins la deuxième paroi latérale de dossier (34) est formée au moins par endroits d'un matériau pouvant se bomber de manière élastiquement flexible.

5. Dossier suspendu selon l'une quelconque des revendications précédentes, **caractérisé en ce que** la première paroi latérale de dossier (32) est formée d'un tissu textile peu élastique ou d'un film plastique peu élastique.

6. Dispositif de transport suspendu avec un agencement d'élément de conduite de transport (X), en particulier composé de rails de guidage, et avec au moins un dossier suspendu (1) selon l'une quelconque des revendications 1 à 5 qui est suspendu ou peut être suspendu avec son cadre suspendu (2) à l'agencement d'élément de conduite de transport en position de transport, et avec au moins un contour perturbateur (40 ; 140) mobile qui est mobile en cas de dossier suspendu déplacé en position de transport dans le dispositif de transport suspendu dans la voie de l'élément de déplacement (30) du dossier suspendu afin de déplacer l'élément de déplacement (30) de sa position normale lors du déplacement du dossier suspendu par rapport au contour perturbateur (40 ; 140) et ainsi de déplier les deux parois latérales de dossier (32, 34) des dossiers suspendus.

7. Dispositif de transport suspendu selon la revendication 6, **caractérisé en ce que** le contour perturbateur (40 ; 140) mobile est conçu de sorte qu'il puisse déplacer l'élément de déplacement (30) d'un dossier suspendu le passant lors du transport dans le dispositif de transport suspendu seulement d'une valeur déterminée de sa position normale.

8. Dispositif de transport suspendu selon la revendication 6 ou 7, **caractérisé en ce que** le contour perturbateur (40 ; 140) mobile est conçu de sorte qu'il puisse déplacer l'élément de déplacement (30) d'un dossier suspendu (1) le sollicitant lors du transport dans le dispositif de transport suspendu d'une valeur maximale, pour lequel le cadre de pivotement (8) occupe par rapport au cadre suspendu (2) une position de pivotement qui correspond à une position de basculement du dossier suspendu.
